# EUROPÄISCHE PATENTSCHRIFT

(11) **EP 2 726 801 B1**
(45) Veröffentlichungstag und Bekanntmachung des Hinweises auf die Patenterteilung: **12.08.2015**
(21) Anmeldenummer: 12730449.1
(22) Anmeldetag: 19.06.2012
(51) Int. Cl.: F25D 23/06

(54) **KÄLTEGERÄT**
REFRIGERATION APPLIANCE
APPAREIL FRIGORIFIQUE

(30) Priorität: 29.06.2011 DE 102011078319
(43) Veröffentlichungstag der Anmeldung: 07.05.2014
(73) Patentinhaber: BSH Hausgeräte GmbH, 81739 München (DE)
(72) Erfinder: HOWE, Michael, 89537 Giengen (DE); PFLOMM, Berthold, 89077 Ulm (DE); THEVESSEN, Michael, 88483 Burgrieden (DE)
(86) Internationale Anmeldenummer: PCT/EP2012/061637
(87) Internationale Veröffentlichungsnummer: WO 2013/000758

(56) Entgegenhaltungen:
- EP-A2- 0 967 448
- EP-A2- 2 333 459
- WO-A1-97/32169
- DE-A1- 19 818 995
- DE-A1- 19 907 183
- DE-C- 589 389
- DE-U- 7 338 368
- DE-U1- 9 217 405
- GB-A- 704 529
- JP-A- 1 181 046
- US-A- 2 645 099
- US-A- 2 992 546
- US-A- 6 094 922

## Beschreibung

Die vorliegende Erfindung betrifft ein Kältegerät, insbesondere Haushaltskältegerät, mit einer einen Kühlraum wenigstens teilweise einschließenden thermischen Isolierung, in der ein Zuführrohr für Kältemittel zur Zuführung des Kältemittels zu einem Verdampfer des Kältegerätes vorgesehen ist.

Bei bekannten Kältegeräten, insbesondere Kühl- und Gefriergeräten, werden zur Kühlung Verdampfer, beispielsweise Verdampferplatinen, vorgesehen, in die das Kältemittel aus einem Kanal eingespritzt wird. Häufig liegt die Einspitzstelle für das Kältemittel in den Verdampfer innerhalb des Isoliermaterials, beispielsweise Isolierschaums des Gehäuses des Gerätes. Der Schaum ist den Kühlraum des Kältegerätes, der zur Aufnahme von Kühlgut dient, umgebend als Isolierung vorgesehen. Dieser Schaum überträgt in ihn eingeleitete Geräusche gut, so dass in ihn eingetragene Geräusche dann vom Gehäuse abgestrahlt werden.

Eine Dämpfung oder Dämmung mit herkömmlichen Materialien wirkt an der Einspritzstelle nur bedingt, da durch die tiefen Temperaturen in diesem Bereich die einsetzbaren Materialien hart werden und dadurch Schwingungen in einem breiten Frequenzspektrum auf den Schaum im Gehäuse übertragen werden, die an der Einspritzstelle entstehen. Besonders weiche oder schaumartige Materialien werden durch den Druck, der beim Schäumen entsteht, zusammengedrückt und haben den gleichen Nachteil bei der Schallleitung.

Die Patentschrift US 2,645,099 zeigt ein Kältegerät umfassend einen Verdampfer, der in einer Isolierung vorgesehen ist. Von einem Verflüssiger verläuft eine Kapillarrohranordnung zu dem Verdampfer. Die Kapillarrohranordnung umfasst ein Kapillarrohr, das in einem äußeren Rohr verläuft.

Die Offenlegungsschrift WO 97/32169 A1 zeigt ein Kapillarrohr, das zu einem Verdampfer führt. Hierbei liegt das Kapillarrohr direkt an einer Verengung eines inneren Rohrs eines Verdampfers an, wobei das innere Rohr in einem äußeren Rohr verläuft.

Die Patentschrift DE 589 389 C zeigt einen durch eine Kältemaschine betriebenen Haushaltskühlschrank.

Die Offenlegungsschrift DE 198 18 995 A1 zeigt ein Kältegerät, wobei eine folienähnliche Matte auf eine wärmeisolationsseitige Oberfläche eines Verdampfers geklebt ist.

Vor diesem Hintergrund ist es eine Aufgabe der vorliegenden Erfindung, ein verbessertes Kältegerät, insbesondere Haushaltskältegerät, zu schaffen, das insbesondere in seinem Geräuschemissionsverhalten verbessert ist.

Die Aufgabe wird durch ein Kältegerät, insbesondere Haushaltskältegerät, mit den Merkmalen von Anspruch 1 gelöst. Weitere vorteilhafte Ausgestaltungen sind in den Unteransprüchen angegeben.

Demgemäß weist ein Kältegerät eine einen Kühlraum wenigstens teilweise einschließende thermische Isolierung auf, in der ein Zuführrohr für Kältemittel zur Zuführung des Kältemittels zu einem Verdampfer des Kältegerätes vorgesehen ist. Das Zuführrohr weist einen endseitigen Abschnitt mit einer Einspritzstelle zum Einspritzen des Kältemittels in den Verdampfer auf, der berührungsfrei von der Isolierung in einer Aussparung der Isolierung verläuft.

Durch die Vermeidung des direkten Kontaktes zwischen dem Zuführrohr und dem Schaum im Bereich des endseitigen Abschnitts mit der Einspritzstelle zum Einspritzen des Kältemittels in den Verdampfer wird die direkte Übertragung von Schwingungen zum Zuführrohr auf die Isolierung vermieden. Es sind Grenzschichten Festkörper/Luft realisiert, die eine direkte Schallübertragung verhindern. Durch die großen Dichtigkeitsunterschiede zwischen Festkörper und Luft wird eine Schalldämmung erreicht. Schall wird demnach vom Zuführrohr im Bereich des Abschnitts mit der Einspritzstelle zunächst an die umgebende Luft und dann über die Luft nach außen an die Isolierung übertragen. Eine direkte Übertragung von Schallwellen als Körperschall vom Feststoff des Zuführrohres auf den Feststoff der Isolierung wird verhindert. Dadurch kann ein Kältegerät mit einem verbesserten Schallemissionsverhalten realisiert werden.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Gemäß einer Ausführungsform ist die thermische Isolierung geschäumt oder aus schaumartigem Material hergestellt. Dabei wird bevorzugt ein Schaum aus zwei Komponenten verwendet. Hierbei werden zwei Komponenten gemischt, bevor der Schaum aufgetragen wird. Dieser Schaum härtet unabhängig von der Luftfeuchtigkeit gleichmäßig aus. Deshalb ist auch die Verwendung beispielsweise in geschlossenen Hohlräumen möglich. Die meisten Zwei-Komponentenschäume härten schneller aus als Ein-Komponenten-Schaum.

Gemäß einer weiteren Ausführungsform verläuft der Abschnitt wenigstens teilweise in und beabstandet zu einem Rohr, dass an der Isolierung vorgesehen ist. Durch das Rohr wird um den Abschnitt herum ein Hohlraum gebildet, der beim Einschäumen frei von Schaum bleibt. Beispielsweise ist das Rohr einendig oder beidendig mit dem durchtretenden Zuführrohr mit jeweils einer Dichtung abgedichtet. Dadurch wird vermieden, dass an den Rohrenden Dichtungsmaterial beispielsweise Schaum eintritt und den Hohlraum füllt. Die Dichtungen verlaufen bei einem zylindrischen Rohr beispielsweise ringförmig um das Einspritzrohr. Für eine verbesserte Körperschallentkopplung zwischen den Dichtungen und dem Einspritzrohr können zwischen dem Einspritzrohr und den Dichtungen elastische Zwischenringe, beispielsweise aus Gummi oder einem Kunststoff, vorgesehen werden. Dadurch wird die Übertragung von Körperschall vom Einspritzrohr über die Dichtungen auf das Rohr verhindert.

Gemäß einer weiteren Ausführungsform verläuft das Rohr vollständig in Kontakt mit der Isolierung. Der Außenumfang wird dann vollständig von der Isolierung gehalten. Dies hat den Vorteil, dass eine Schwingungsanregung des Rohres durch die Haltekräfte der Isolierung besonders gut gedämpft wird. Eine vollständige Einfassung verhindert dabei das Aufschwingen auch von Teilabschnitten des Rohrs. Ferner ergibt sich dadurch ein besonders fester Sitz des Rohres in der Isolierung, was eine Verlagerung des Rohres im Betrieb verhindert.

Gemäß einer Ausführungsform ist die Dichtung aus Metall oder einem elastischen Material, insbesondere Gummi oder Schaumstoff, hergestellt. Metall als hartes Material ermöglicht es dabei, dass ein Teil der beim Einspritzen des Kältemittels in den Verdampfer entstehenden Schallwellen zwischen den beiden Dichtungen reflektiert wird.. Die Dichtungen wirken dabei zusammen mit dem Rohr analog einem Resonanzschalldämpfer. Das Rohr ist beispielsweise ebenfalls aus Metall, insbesondere Stahl, gefertigt. Das harte Material bietet eine gute Schallreflexion mit dem umgebenden weichen Material. Dadurch kann eine besonders gute Schalldämpfung erzielt werden. Sind die Dichtungen aus Gummi oder Kunststoff hergestellt, lassen sie sich als elastische Elemente besonders einfach in das Rohr einfügen. Ein Einströmen von Schaumstoff beim Einschäumen in das Rohr wird auch dann verhindert.

Gemäß einer Ausführungsform ist das Rohr konisch geformt. Durch die konische Form variiert der Durchmesser des Rohrs über seine Länge. Dies ermöglicht es, dass eine Schwingungsanregung des Rohrs erschwert wird. Eine einheitliche auf einen Rohrdurchmesser bezogene Eigenschwingungsfrequenz ist nicht gegeben. Das akustische Verhalten des Rohres und damit auch des Kältegerätes kann auf diese Weise verbessert werden.

Gemäß einer weiteren Ausführungsform weist das Rohr einen ovalen Querschnitt auf. Durch diese Form wird das akustische Verhalten des Rohres verbessert. Ferner kann es besonders flach gestaltet und damit besonders gut in eine Wand des Kühlraums integriert werden.

Gemäß einer Ausführungsform ist das Rohr innen mit Dämmmaterial, insbesondere Schaumstoff, beschichtet. Das Rohr bildet dabei als Absorptions-Schalldämpfer einen mit Dämmmaterial als Schallschluckstoff ausgekleideten Kanal. Dadurch wird durch Reibungsverlust Schall in Wärme umgewandelt und eine Schalldämpfung erzielt. Die Schallemissionen werden dadurch reduziert.

Gemäß einer Ausführungsform ist das Rohr siebartig perforiert. Dadurch ergibt sich ein besonders fester Sitz im Dämmmaterial. Ferner kann die Schallabsorptionsleitung des Rohres dadurch, insbesondere in Verbindung mit der Geometrie des Rohres, optimiert werden.

Gemäß einer weiteren Ausführungsform ist die Aussparung mit einem weichen elastischen Material, insbesondere Schaumstoff, befüllt. Drosseldämpfer hingegen arbeiten mit porösem, durchlässigem Material, mit dem der Querschnitt eines Rohres ausgefüllt wird. Zum einen wird dadurch,wiederum Schall in Wärme überführt, zum anderen die Fließgeschwindigkeit im Rohr vermindert. Beides führt zur Schallminderung.

Gemäß einer weiteren Ausführungsform ist das Rohr dicht mit dem Verdampfer verbunden, insbesondere an den Verdampfer angelötet oder angeklebt. Dadurch können Schallemissionen, die an der Einspritzstelle von dem Zuführrohr beim Einspritzen von Kältemittel in den Verdampfer entstehen, besonders gut in das Rohr eingeleitet und am Austreten in die Umgebung gehindert werden.

Gemäß einer Ausführungsform ist der Verdampfer platinenartig, insbesondere als Rollbondplatine, ausgeführt. Dadurch lassen sich unterschiedliche Kanalbilder für das Kältemittel einfach realisieren und unterschiedlich große Verdampfer herstellen. Ferner kann der Verdampfer mit dieser Technik sehr flach gestaltet werden, was Vorteile bei der Integration des Verdampfers in das Kältegerät hat.

Weitere mögliche Implementierungen der Erfindung umfassen auch nicht explizit genannte Kombinationen von zuvor oder im Folgenden bezüglich der Ausführungsbeispiele beschriebenen Merkmale. Dabei wird der Fachmann auch Einzelaspekte als Verbesserungen oder Ergänzungen zu der jeweiligen Grundform des Kältegerätes hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigt dabei:
- Figur 1:: eine schematische perspektivische Darstellung eines Kältegerätes gemäß einem ersten Ausführungsbeispiel; und
- Figur 2:: eine schematische perspektivische Darstellung des Kältegerätes gemäß dem ersten Ausführungsbeispiel aus einer anderen Perspektive.

In den Figuren sind gleiche oder funktionsgleiche Elemente mit denselben Bezugszeichen versehen, sofern nichts Anderes angegeben ist.

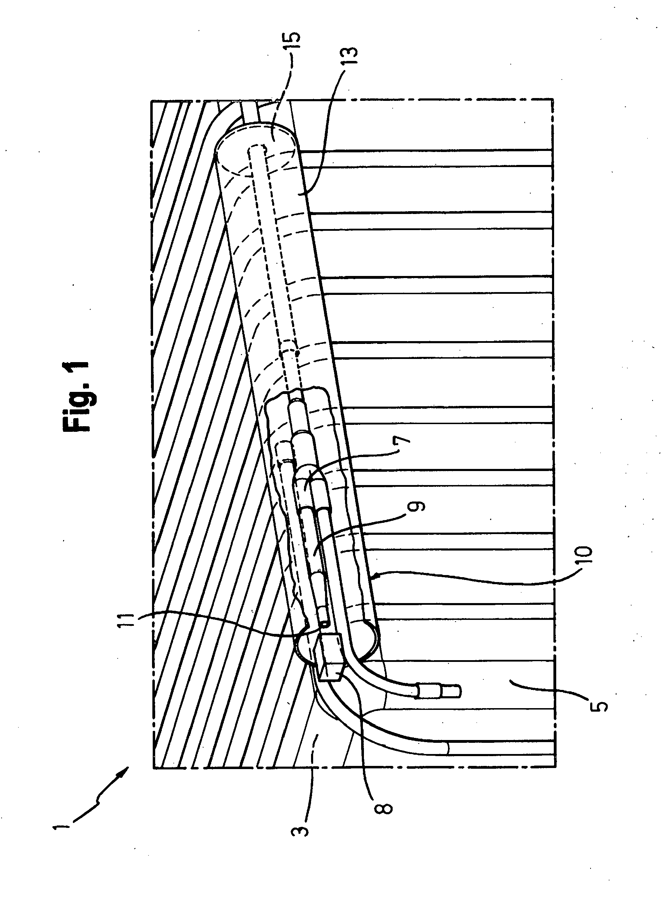

Die Figur 1 zeigt eine schematische perspektivische Darstellung eines Kältegerätes 1 gemäß einem ersten Ausführungsbeispiel. Das Kältegerät 1 weist einen Kühlraum 3 auf, der von einer Isolierung 5 umgeben ist. Die Isolierung ist bei diesem Ausführungsbeispiel als Isolierschaum realisiert. Ein Zuführrohr 7 führt Kältemittel zu einem am Kühlraum 3 angeordneten Verdampfer 8 zu. Das Zuführrohr 7 verläuft im Bild schräg nach links unten. Das Zuführrohr 7 verläuft durch die Isolierung 5. Der Verdampfer 8 ist schematisch als Quader dargestellt. Das Zuführrohr 7 weist einen endseitigen Abschnitt 9 auf. An diesem endseitigen Abschnitt 9 ist eine Einspritzstelle 11 vorgesehen, die dazu dient, das Kältemittel in den Verdampfer 8 einzuspritzen. Die Einspritzstelle 11 ist bei diesem Ausführungsbeispiel als düsenartige Verengung ausgeführt. Der endseitige Abschnitt 9 verläuft durch eine Aussparung 10 der Isolierung 5. Das bedeutet, dass der endseitige Abschnitt 9 im Bereich der Aussparung 10 von der Isolierung 5 beabstandet ist.

Durch die Vermeidung des direkten Kontaktes zwischen dem Zuführrohr 7 und dem Schaum im Bereich des endseitigen Abschnitts 9 mit der Einspritzstelle 11 zum Einspritzen des Kältemittels in den Verdampfer 8 wird die direkte Übertragung von Schwingungen vom Zuführrohr 7 auf die Isolierung 5 vermieden. Eine direkte Übertragung von Schallwellen als Körperschall vom Feststoff des Zuführrohres 7 auf den Feststoff der Isolierung 5 wird verhindert. Dadurch kann ein Kältegerät 1 mit einem verbesserten Schallemissionsverhalten realisiert werden.

Ferner ist ein Rohr 13 das Zuführrohr 7, bei diesem Ausführungsbeispiel im Bereich des endseitigen Abschnitts 9, umgebend angeordnet. Das Rohr 13 ist bei diesem Ausführungsbeispiel aus Metall als einem harten Werkstoff hergestellt. Zum einen wird durch das Rohr 13 beim Einschäumen des Zuführrohrs 7 sichergestellt, dass die Aussparung 10 um den endseitigen Abschnitt 9 des Zuführrohrs 7 frei von Isolierschaum 5 bleibt. Um diesen Effekt zu verstärken ist das Rohr 13 bei diesem Ausführungsbeispiel an seinen Enden zusätzlich mit Dichtungen 15 gegen das Zuführrohr 7 abgedichtet. Dadurch wird verhindert, dass beim Einschäumen des Zuführrohrs 7 beispielsweise mit Isolierschaum 5, der Isolierschaum 5 kopfseitig in das Rohr 13 eindringt und die Aussparung 10 füllt. Ferner wirkt das Rohr 13 als eine Art Schalldämpfer. Die Dichtungen 15 wirken dabei zusammen mit dem Rohr 13 analog einem Resonanzschalldämpfer. Die Dichtungen sind daher bei diesem Ausführungsbeispiel wie das Rohr 13 aus Metall, insbesondere Stahl, gefertigt. Schallwellen werden dadurch zwischen den Dichtungen 15 reflektiert und verlieren dabei an Energie. Dadurch werden die Schallemissionen reduziert.

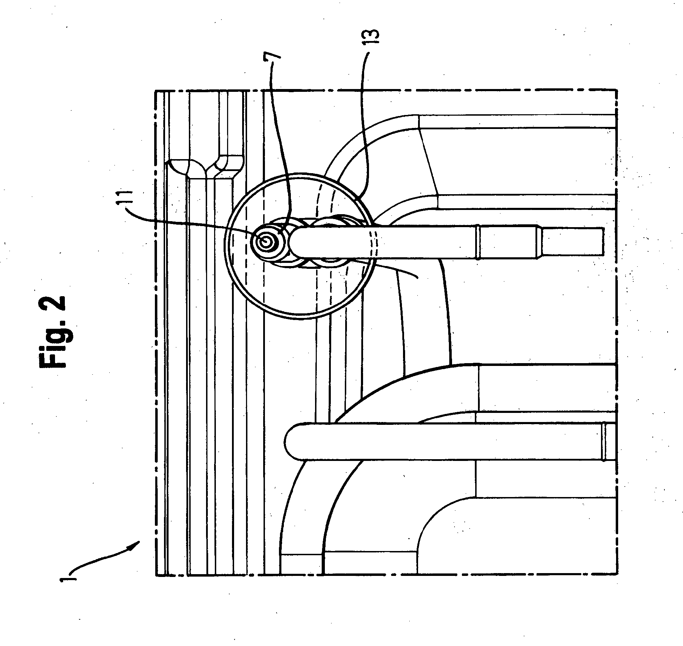

Figur 2 zeigt eine schematische perspektivische Darstellung des Kältegerätes 1 gemäß dem ersten Ausführungsbeispiel aus einer anderen Perspektive. Das Rohr 13 ragt bei der Darstellung von Fig. 2 aus der Bildebene heraus. Die Einspritzstelle 11 des Zuführrohrs 7 ist dabei auf den Betrachter zugewandt. Um das Zuführrohr 7 erstreckt sich, im Schnitt als Kreis dargestellt, das Rohr 13. Der Bereich zwischen dem Zuführrohr 7 und dem Rohr 13 bleibt bei diesem Ausführungsbeispiel frei von der Isolierung 5.

### Verwendete Bezugszeichen:

- 1: Kältegerät
- 3: Kühlraum
- 5: Isolierung
- 7: Zuführrohr
- 8: Verdampfer
- 9: Endseitiger Abschnitt
- 10: Aussparung
- 11: Einspritzstelle
- 13: Rohr
- 15: Dichtung

## Patentansprüche

1. Kältegerät (1), insbesondere Haushaltskältegerät, mit einer einen Kühlraum (3) wenigstens teilweise einschließenden thermischen Isolierung (5), in der ein Zuführrohr (7) für Kältemittel zur Zuführung des Kältemittels zu einem Verdampfer (8) des Kältegerätes (1) vorgesehen ist, das Zuführrohr (7) einen endseitigen Abschnitt (9) mit einer Einspritzstelle (11) zum Einspritzen des Kältemittels in den Verdampfer (8) aufweist, der berührungsfrei von der Isolierung (5) in einer Aussparung (10) der Isolierung (5) verläuft, **dadurch gekennzeichnet, dass** Schall demnach vom Zuführrohr (7) im Bereich des Abschnitts (9) mit der Einspritzstelle (11) zunächst an eine umgebende Luft und dann über die Luft nach außen an die Isolierung (5) übertragen werden kann.

2. Kältegerät (1) nach Anspruch 1, **dadurch gekennzeichnet, dass** die thermische Isolierung (5) geschäumt oder aus schaumartigem Material hergestellt ist.

3. Kältegerät (1) nach Anspruch 1 oder 2, **dadurch gekennzeichnet, dass** der Abschnitt (9) wenigstens teilweise in und beabstandet zu einem Rohr (13) verläuft, dass an der Isolierung (5) vorgesehen ist.

4. Kältegerät (1) nach Anspruch 3, **dadurch gekennzeichnet, dass** das Rohr (13) vollständig in Kontakt mit der Isolierung (5) verläuft.

5. Kältegerät (1) nach einem der Ansprüche 3 oder 4, **dadurch gekennzeichnet, dass** das Rohr (13) einendig oder beidendig mit dem durchtretenden Zuführrohr (7) mit jeweils einer Dichtung (15) abgedichtet ist.

6. Kältegerät (1) nach Anspruch 5, **dadurch gekennzeichnet, dass** die Dichtung (15) aus Metall oder einem elastischen Material, insbesondere Gummi oder Schaumstoff, hergestellt ist.

7. Kältegerät (1) nach einem der Ansprüche 3 bis 6, **dadurch gekennzeichnet, dass** das Rohr (13) konisch geformt ist.

8. Kältegerät (1) nach einem der Ansprüche 3 bis 7, **dadurch gekennzeichnet, dass** das Rohr (13) einen ovalen Querschnitt aufweist.

9. Kältegerät (1) nach einem der Ansprüche 3 bis 8, **dadurch gekennzeichnet, dass** das Rohr (13) innen mit Dämmmaterial, insbesondere Schaumstoff, beschichtet ist.

10. Kältegerät (1) nach einem der Ansprüche 3 bis 9, **dadurch gekennzeichnet, dass** das Rohr (13) aus Metall, insbesondere Stahl, gefertigt ist.

11. Kältegerät (1) nach einem der Ansprüche 3 bis 10, **dadurch gekennzeichnet, dass** das Rohr (13) siebartig perforiert ist.

12. Kältegerät (1) nach einem der vorhergehenden Ansprüche, **dadurch gekennzeichnet, dass** das Rohr (13) dicht mit dem Verdampfer (8) verbunden, insbesondere an den Verdampfer angelötet oder angeklebt, ist.

13. Kältegerät (1) nach einem der vorhergehenden Ansprüche, **dadurch gekennzeichnet, dass** die Aussparung (10) mit einem weichen elastischen Material, insbesondere Schaumstoff, befüllt ist.

14. Kältegerät (1) nach einem der Ansprüche, **dadurch gekennzeichnet, dass** zwischen dem Rohr (13) und dem Zuführrohr (7) poröses, durchlässiges Material angeordnet ist.

15. Kältegerät (1) nach einem der vorhergehenden Ansprüche, **dadurch gekennzeichnet, dass** der Verdampfer (8) platinenartig, insbesondere als Rollbondplatine, ausgeführt ist.

## Claims

1. Refrigeration appliance (1), in particular a domestic refrigeration appliance, having thermal insulation (5) which at least partially encloses a refrigeration compartment (3) and in which a supply tube (7) for refrigerant is provided to feed the refrigerant to an evaporator (8) of the refrigeration appliance (1), the supply tube (7) has a terminal section (9) with an injection point (11) for injecting the refrigerant into the evaporator (8), said terminal section (9) extending in a cavity (10) of the insulation (5) without being in contact with the insulation (5), **characterised in that** sound can therefore be transmitted from the supply tube (7) in the region of the section (9) with the injection point (11) initially to surrounding air and then via the air outwards to the insulation (5).

2. Refrigeration appliance (1) according to claim 1, **characterised in that** the thermal insulation (5) is foamed or manufactured from foam-like material.

3. Refrigeration appliance (1) according to claim 1 or 2, **characterised in that** the section (9) runs at least partially in and at a distance from a tube (13) which is provided on the insulation (5).

4. Refrigeration appliance (1) according to claim 3, **characterised in that** the tube (13) runs fully in contact with the insulation (5).

5. Refrigeration appliance (1) according to one of claims 3 or 4, **characterised in that** the tube (13) is sealed at one end or at both ends with the supply tube (7) passing through it, by a seal (15) in each case.

6. Refrigeration appliance (1) according to claim 5, **characterised in that** the seal (15) is manufactured from metal or an elastic material, in particular rubber or foam.

7. Refrigeration appliance (1) according to one of claims 3 to 6, **characterised in that** the tube (13) is conically shaped.

8. Refrigeration appliance (1) according to one of claims 3 to 7, **characterised in that** the tube (13) has an oval cross-section.

9. Refrigeration appliance (1) according to one of claims 3 to 8, **characterised in that** the tube (13) is coated internally with soundproofing material, in particular foam.

10. Refrigeration appliance (1) according to one of claims 3 to 9, **characterised in that** the tube (13) is manufactured from metal, in particular steel.

11. Refrigeration appliance (1) according to one of claims 3 to 10, **characterised in that** the tube (13) is perforated like a sieve.

12. Refrigeration appliance (1) according to one of the preceding claims, **characterised in that** the tube (13) is tightly connected to the evaporator (8), particularly soldered or glued to the evaporator.

13. Refrigeration appliance (1) according to one of the preceding claims, **characterised in that** the cavity (10) is filled with a soft elastic material, in particular foam.

14. Refrigeration appliance (1) according to one of the claims, **characterised in that** porous, permeable material is arranged between the tube (13) and the supply tube (7).

15. Refrigeration appliance (1) according to one of the preceding claims, **characterised in that** the evaporator (8) is embodied like a plate, in particular as a roll-bond plate.

## Revendications

1. Appareil frigorifique (1), notamment appareil frigorifique ménager, comprenant une isolation thermique (5) entourant au moins partiellement un espace de réfrigération (3), dans laquelle isolation est prévu un tube d'amenée (7) de fluide frigorigène destiné à conduire le fluide frigorigène jusqu'à un évaporateur (8) de l'appareil frigorifique (1), ledit tube d'amenée (7) comportant une partie d'extrémité (9) dotée d'un point d'injection (11) pour injecter le fluide frigorigène dans l'évaporateur (8), laquelle partie s'étend dans un évidement (10) de l'isolation (5) sans être en contact avec cette dernière, **caractérisé en ce que** du son peut ainsi être transmis du tube d'amenée (7), au niveau de la partie (9) dotée du point d'injection (11), d'abord à l'air environnant et ensuite via l'air vers l'extérieur à l'isolation (5).

2. Appareil frigorifique (1) selon la revendication 1, **caractérisé en ce que** l'isolation thermique (5) est moussée ou réalisée en un matériau de type mousse.

3. Appareil frigorifique (1) selon la revendication 1 ou 2, **caractérisé en ce que** la partie (9) s'étend au moins partiellement dans et à distance d'un tube (13) prévu sur l'isolation (5).

4. Appareil frigorifique (1) selon la revendication 3, **caractérisé en ce que** le tube (13) s'étend de façon à être entièrement en contact avec l'isolation (5).

5. Appareil frigorifique (1) selon l'une des revendications 3 ou 4, **caractérisé en ce que** le tube (13) est rendu étanche à une extrémité ou aux deux extrémités, avec le tube d'amenée (7) traversant, chaque fois par un joint d'étanchéité (15).

6. Appareil frigorifique (1) selon la revendication 5, **caractérisé en ce que** le joint d'étanchéité (15) est réalisé en métal ou en un matériau élastique, en particulier en caoutchouc ou mousse.

7. Appareil frigorifique (1) selon l'une des revendications 3 à 6, **caractérisé en ce que** le tube (13) a une forme conique.

8. Appareil frigorifique (1) selon l'une des revendications 3 à 7, **caractérisé en ce que** le tube (13) a une section transversale ovale.

9. Appareil frigorifique (1) selon l'une des revendications 3 à 8, **caractérisé en ce que** le tube (13) est revêtu intérieurement de matériau isolant, en particulier de mousse.

10. Appareil frigorifique (1) selon l'une des revendications 3 à 9, **caractérisé en ce que** le tube (13) est réalisé en métal, en particulier en acier.

11. Appareil frigorifique (1) selon l'une des revendications 3 à 10, **caractérisé en ce que** le tube (13) est perforé à la manière d'un tamis.

12. Appareil frigorifique (1) selon l'une des revendications précédentes, **caractérisé en ce que** le tube (13) est relié de manière étanche à l'évaporateur (8), en particulier brasé ou collé sur celui-ci.

13. Appareil frigorifique (1) selon l'une des revendications précédentes, **caractérisé en ce que** l'évidement (10) est rempli d'un matériau souple élastique, en particulier de mousse.

14. Appareil frigorifique (1) selon l'une des revendications précédentes, **caractérisé en ce qu'**un matériau poreux perméable est placé entre le tube (13) et le tube d'amenée (7).

15. Appareil frigorifique (1) selon l'une des revendications précédentes, **caractérisé en ce que** l'évaporateur (8) est réalisé sous forme de platine, en particulier sous forme de platine Rollbond.
